# EUROPÄISCHE PATENTANMELDUNG

(11) **EP 1 323 922 A1**
(43) Veröffentlichungstag der Anmeldung: **02.07.2003**
(21) Anmeldenummer: 01970399.0
(22) Anmeldetag: 03.09.2001
(51) Int. Cl.: F03D 7/04, F03D 9/00

(54) **ENERGIEUMWANDLUNGSVERFAHREN**

(30) Priorität: 04.09.2000 RU 2000123043
(71) Anmelder: Subochev, Valery Yurievich, Vladivostok, 690087 (RU); Dashkov, Alexander Nikolaevich, Primorsky Krai, Ussuriisk, 692524 (RU)
(72) Erfinder: DASHKOV, Alexandr Nikolaevich, Primorsky krai, Ussuriisk, 692524 (RU)
(74) Vertreter: Jeck, Anton, Dipl.-Ing.
(86) Internationale Anmeldenummer: RU0100362
(87) Internationale Veröffentlichungsnummer: WO02020983

(57) **Zusammenfassung**

Die Erfindung betrifft ein Verfahren zur Energieumwandlung in einem Kraftwerk-Generator, dessen Leistung bzw. Wellenumdrehungsfrequenz unbeständig ist; die Welle ist mit dem Rotor eines oder mehrerer Generatoren mechanisch gekoppelt; die Generatoren sind mit n-Phasen-Ständerwicklungen versehen; die elektrische Energie der Wicklung wird teilweise für den Verbraucher verwendet und teilweise in eine andere Energieform umgewandelt und in einer Speichereinrichtung gespeichert.

Beim Betreiben eines nicht unabhängigen Kraftwerks, das mit zwei oder mehreren Generatoren versehen ist, deren zweiter Generator auch mit der Motorwelle mechanisch gekoppelt ist und eine andere Anzahl in der Wicklungsphase haben kann, erfolgt die Einspeisung der elektrischen Energie für den Verbraucher von der Wicklung eines oder mehrerer Generatoren nur unter einer Umdrehungsfrequenz des Rotors, die der von der Wicklung aufgenommenen Verbraucherstromfrequenz entspricht; die Stabilisierung einer solchen Umdrehungsfrequenz wird durch das Aus- oder Einschalten und die Änderung der Speichereinrichtungsbelastung gleichzeitig von allen Phasen eines oder mehrerer Generatoren, die gleichzeitig am Verbraucher angeschlossen sind, bzw. von einzelnen Phasen eines oder mehrerer vom Verbraucher abgeschalteten Generatoren ausgeführt.

## Beschreibung

### Erfindungsgebiet

Die Erfindung bezieht sich auf die Elektrizitätserzeugung und kann in Wind- und Wasserkraftwerken zur zusätzlichen Versorgung von Verbrauchern mit Wechselstrom und anderen Energieformen, z. B. mit Wärmeenergie, verwendet werden.

### Stand der Technik

Bekannte Verfahren zur Energieumwandlung mit einem Kraftwerks-Generator, dessen Wellenleistung bzw. -umdrehungsfrequenz sind unbeständig (insbesondere bei einem Windkraftwerk), sehen für das Verschieben der Frequenz des vom Generator erzeugten Stroms auf die Industriefrequenz besondere Frequenzumformer bzw. Umwandler [Patent RF Nr. 2132483, 1999] als auch andere zusätzliche Einrichtungen vor, z. B. solche, die den Windangriffswinkel ändern [Patent RF Nr. 2099590, 1997]. Solche zusätzlichen Einrichtungen führen jedoch zu einem komplexen Aufbau der Anlage und reduzieren den Anlagenwirkungsgrad.

Die Erfindung bezieht sich auf ein Verfahren zur Energieumwandlung in einem Windkraftwerks-Generator, dessen Wellenleistung bzw. -umdrehungsfrequenz unbeständig ist, wobei die Welle eines oder mehrerer Rotoren der Generatoren mechanisch gekoppelt ist, die mit n-Phasen-Ständerwicklungen versehen sind. Gemäß dem Verfahren wird die Elektrizität der Wicklungen teilweise für den Verbraucher verwendet, und teilweise kann diese Elektrizität in eine andere Energieform für die Speicherung in einer Speichereinrichtung umgewandelt werden [Patent RF Nr. 2015412, 1994]. Die Anlage für die Ausführung des Verfahrens ist mit einem Frequenzumformer versehen, der konstruktiv unkompliziert ist und einen hohen Wirkungsgrad hat.

### Kurzfassung der Erfindung

Das der Erfindung zugrunde liegende Problem ist die Erhöhung der Wirkungsgrades eines Kraftwerks, dessen Wellenleistung bzw. -umdrehungsfrequenz unbeständig ist.

Das vorgeschlagene Verfahren zur Energieumwandlung kann in der ersten Linie bei einem nicht unabhängigen Kraftwerk ausgeführt werden, dessen Motorwelle mit Rotoren von 2 oder mehr Elektrogeneratoren mechanisch gekoppelt ist, die entsprechend n- und m-Phasen-Ständerwicklungen haben (n kann nicht gleich m sein). Die elektrische Energie der Wicklungen kann teilweise in eine andere Energieform umgewandelt und in einer Speichereinrichtung gespeichert werden. Ein Teil der von einem oder mehreren Generatoren erzeugten Energie kann für den Verbraucher nur dann verwendet werden, wenn die Rotorumdrehungsfrequenz der Verbraucherstromfrequenz der Wicklung entspricht.

Die Stabilisierung dieser Umdrehungsfrequenz wird durch das Aus- oder Einschalten und die Änderung der Speichereinrichtungsbelastung gleichzeitig von allen Phasen eines oder mehrerer Generatoren, die gleichzeitig an den Verbraucher angeschlossen sind, bzw. von einzelnen Phasen eines oder mehrerer vom Verbraucher abgeschalteten Generatoren erreicht. Das Ein- und Ausschalten des Verbrauchers bzw. der Speichereinrichtungsbelastung kann mit Thyristoren mit Hilfe eines Prozessors aufgrund der Angaben eines Stromfrequenz- oder Drehzahlgebers erfolgen.

Die elektrische Energie kann in der Speichereinrichtung teilweise in Wärmeenergie, z. B. mit in eine Wärmeträgerflüssigkeit getauchten Heizkörpern, umgewandelt werden, und die Änderung der Speichereinrichtungsbelastung kann in diesem Fall durch die Änderung des Heizkörperwiderstands erfolgen. Falls die Heizkörper als 15 parallele Leiterflächen ausgeführt sind, ist es zu empfehlen, die Belastungsänderung durch Änderung des Abstandes zwischen den in eine Wärmeträgerflüssigkeit getauchten Flächen auszuführen.

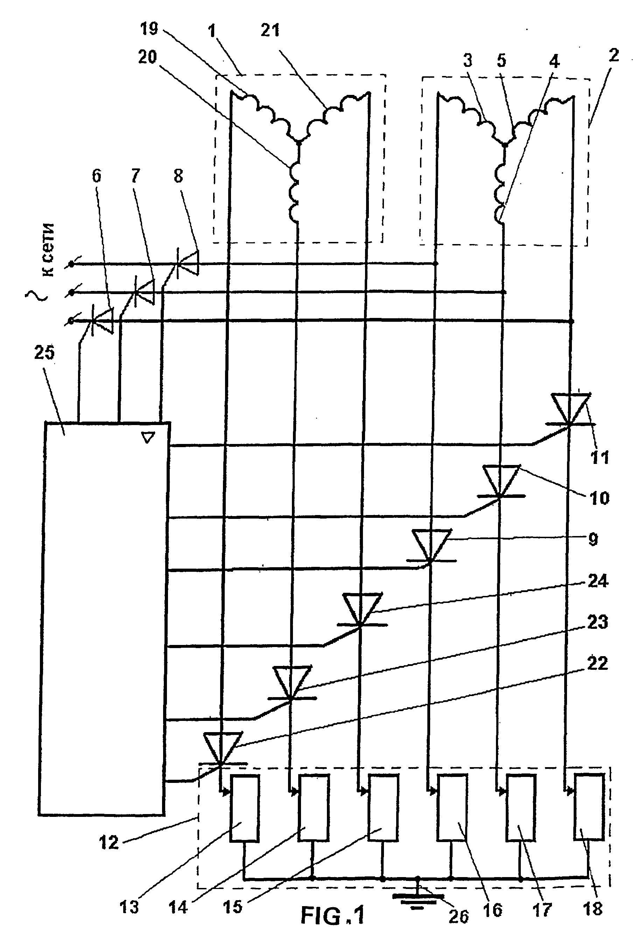

### Kurzbeschreibung der Zeichnung

Die Erfindung wird anhand eines Schaltplans eines Zusatzkraftwerks erläutert.

### Ausführungsbeispiel der Erfindung

Ein Windkraftwerk (WKW) ist mit zwei 3-Phasen-Generatoren 1 und 2 versehen, deren Rotoren mit dem jeweiligen Generator fest gekoppelt sind (nicht dargestellt). Der Generator 1 hat eine Leistung, die gleich 1/3 der Leistung des Generators 2 ist (Im Gesamtfall ist es besser, wenn die Wicklungsleistung eines Generators gleich der Leistung einer Phase von einem anderen Generator ist). Die Phasen 3-5 der Ständerwicklungen des Generators 2 sind durch Thyristoren 6-8 an ein Stromnetz und durch Thyristoren 9-11 an einen Blechplatten-Wasservorwärmer 12 angeschlossen, bei dem sich der Abstand zwischen Blechpaaren 13-18 ändern kann. Die Phasen 19-21 des Generators 1 sind durch Thyristoren 22-24 an die Bleche 13-15 angeschlossen. Die Anlage umfasst auch einen Wellendrehgeber (nicht dargestellt), der mit einem Prozessor 25 verbunden ist, der die Thyristoren 6-8, 9-11 und 22-24 steuert, und eine Vorrichtung (nicht dargestellt) zum Einstellen des Spaltes zwischen den Blechplatten 13-18, die an einzelne Phasen 3-5, 19-21 angeschlossen sind, wobei diese Blechplatten an eine Sammelleitung 26 angeschlossen sind.

Das WKW funktioniert wie folgt: Bei Windstille dreht sich die Welle des Windmotors nicht und alle Thyristoren 6-8, 9-11 und 22-24 sind ausgeschaltet. Wenn Wind vorhanden ist, beginnt die Welle des Windmotors leerzulaufen. Sobald die Welle die Umdrehungsfrequenz erreicht, die der Frequenz 50 Hz entspricht, schaltet der Prozessor 25 den Thyristor 22 auf ein Signal des Drehgebers hin aus und schaltet die Phase 19 zu den Blechplatten 13 des Wasservorwärmers 12 durch, wobei der Spalt zwischen den Blechplatten maximal ist. Bei weiterer Erhöhung der Umdrehungsfrequenz erfolgt deren Stabilisation durch ein Bremsen auf ein Signal des Prozessors 26 hin durch eine Reduzierung des Spaltes zwischen den Blechplatten 13 mittels der Einstellvorrichtung. Nachdem der Höchstwert des Spaltes zwischen den Blechplatten 13 erreicht ist, und die Wellenumdrehungsfrequenz den gewünschten Wert übertrifft, schaltet der Prozessor 25 die Phase 20 mit dem Thyristor 23 zu den Blechplatten 14 des Wasservorwärmers 12 durch, wobei die Stabilisierung der Umdrehungsfrequenz ebenso wie bei der Phase 20 erfolgt. Bei weiterer Erhöhung der Leistung und Umdrehungsfrequenz wird an der Welle des Windmotors die dritte Phase 21 des Generators 1 zum Wasservorwärmer 12 durchgeschaltet. Nachdem die von allen Phasen 19-21 des Generators 1 erzeugte Leistung den Sollwert erreicht hat, schaltet der Prozessor 25 mit den Thyristoren 22-24 die Phasen 19-21 vom Wasservorwärmer 12 ab und schaltet mit den Thyristoren 9-11, wenn sich die Windbelastung erhöht, die Phasen 3-5 serienweise an die Blechplatten 16-18 des Wasservorwärmers 12 an. Nachdem die von allen Phasen 3-5 des Generators 2 erzeugte Leistung den Sollwert erreicht hat, schaltet der Generator 2 mit dem Thyristoren 9-11 und 6-8 auf die Einspeisung der Elektrizität ins Stromnetz (für den Verbraucher) um, und bei der Erhöhung der Windbelastung erfolgt eine Stabilisierung der Umdrehungsfrequenz durch die Serienschaltung der Phasen 19-21 des Generators 1 zum Wasservorwärmer 12. Wenn die elektrische Energie im Netz nicht genutzt wird, schalten beide Generatoren auf den Wasservorwärmer 12 um. Beim Absinken der Windbelastung steuert der Prozessor 25 die Phasen 3-5 und 19-21 umgekehrt. Das WKW kann auch mehr als zwei Generatoren umfassen; dann erweitert sich der Bereich der Windbelastung; die einzuspeisende Menge der elektrischen Energie für den Verbraucher und deren Dauer erhöhen sich auch.

### Gewerbliche Anwendbarkeit

Das WKW kann erfolgreich in der Wind- und Wasserkrafttechnik als Zusatzkraftwerk eingesetzt werden.

## Patentansprüche

1. Verfahren zur Energieumwandlung in einem Kraftwerk-Generator, dessen Leistung bzw. Wellenumdrehungsfrequenz unbeständig ist, wobei die Welle mit dem Rotor eines oder mehrerer Generatoren mechanisch gekoppelt ist, die mit n-Phasen-Ständerwicklungen versehen sind, wobei die elektrische Energie der Wicklung teilweise für den Verbraucher verwendet wird und teilweise in eine andere Energieform umgewandelt und in einer Speichereinrichtung gespeichert werden kann,
**dadurch gekennzeichnet,**
**dass** beim Betreiben eines nicht unabhängigen Kraftwerks, das mit zwei oder mehreren Generatoren versehen ist, deren zweiter Generator auch mit der Motorwelle mechanisch gekoppelt ist und eine andere Anzahl in der Wicklungsphase haben kann, die Einspeisung der elektrischen Energie für den Verbraucher von der Wicklung eines oder mehrerer Generatoren nur unter einer Umdrehungsfrequenz des Rotors erfolgt, die der von der Wicklung aufgenommenen Verbraucherstromfrequenz entspricht, und dass die Stabilisierung einer solchen Umdrehungsfrequenz durch das Aus- oder Einschalten und die Änderung der Speichereinrichtungsbelastung gleichzeitig von allen Phasen eines oder mehrerer Generatoren, die gleichzeitig am Verbraucher angeschlossen sind, bzw. von einzelnen Phasen eines oder mehrerer vom Verbraucher abgeschaltener Generatoren ausgeführt wird.

2. Verfahren nach Anspruch 1,
**dadurch gekennzeichnet,**
**dass** das An- und Abschalten der Speichereinrichtungsbelastung durch Thyristoren mittels eines Prozessors aufgrund der Angaben eines Stromfrequenz- oder Drehgebers erfolgt.

3. Verfahren nach Anspruch 2,
**dadurch gekennzeichnet,**
**dass** das An- und Abschalten des Verbrauchers durch Thyristoren mittels eines Prozessors aufgrund der Angaben eines Stromfrequenz- oder Drehgebers erfolgt.

4. Verfahren nach Anspruch 3,
**dadurch gekennzeichnet,**
**dass** die elektrische Energie in der Speichereinrichtung teilweise in Wärmeenergie umgewandelt wird.

5. Verfahren nach Anspruch 4,
**dadurch gekennzeichnet,**
**dass** die Umwandlung in Wärmeenergie durch in Flüssigkeit getauchte Heizkörper erfolgt.

6. Verfahren nach Anspruch 5,
**dadurch gekennzeichnet,**
**dass** die Änderung der Speichereinrichtungsbelastung durch die Änderung des Heizkörperwiderstandes erfolgt.

7. Verfahren nach Anspruch 6,
**dadurch gekennzeichnet,**
**dass** die Änderung des Widerstands der mit parallelen Leiterflächen ausgebildeten Heizkörpern durch Änderung des Abstands der Leiterflächen erfolgt.
